# EUROPÄISCHE PATENTSCHRIFT

(11) **EP 1 891 493 B1**
(45) Veröffentlichungstag und Bekanntmachung des Hinweises auf die Patenterteilung: **10.08.2011**
(21) Anmeldenummer: 06754108.6
(22) Anmeldetag: 02.06.2006
(51) Int. Cl.: G05G 1/08, G05G 5/03

(54) **DREHSTELLER MIT PROGRAMMIERBARER HAPTIK**
ROTARY ACTUATOR HAVING PROGRAMMABLE HAPTICS
ACTUATEUR ROTATIF AVEC HAPTIQUE PROGRAMMABLE

(30) Priorität: 02.06.2005 DE 102005025779; 14.07.2005 DE 102005033512; 12.09.2005 DE 102005043587
(43) Veröffentlichungstag der Anmeldung: 27.02.2008
(73) Patentinhaber: Preh GmbH, 97616 Bad Neustadt a.d. Saale (DE)
(72) Erfinder: KRAMLICH, Andreas, 97424 Schweinfurt (DE)
(74) Vertreter: Bauer, Wulf
(86) Internationale Anmeldenummer: PCT/EP2006/005321
(87) Internationale Veröffentlichungsnummer: WO 2006/128731

(56) Entgegenhaltungen:
- DE-A1- 10 153 002
- DE-B- 1 029 908
- US-A- 4 318 095
- US-A- 4 378 474
- US-A- 5 956 016
- US-B1- 6 404 354

## Beschreibung

Die vorliegende Erfindung betrifft ein Bedienelement mit programmierbarer Haptik für ein Kraftfahrzeug.

Bedienelemente in Form eines Drehstellers bzw. Drehknopfes sind in vielfältiger Form im Stand der Technik bekannt. Die Funktionalität und damit die haptische Rückmeldung an den Benutzer erfolgt beispielsweise mittels diskreter Rastpositionen. Weiterhin sind Bedienelemente bekannt, die eine programmierbare Haptik aufweisen, um die taktile Rückmeldung während des Betriebes, beispielsweise in Abhängigkeit der einzustellenden Größe, flexibel gestalten zu können.

Der Begriff Mittenrast beschreibt eine besondere Rast, die beispielsweise durch eine erhöhte Kraft überwunden werden muss, im Einstellbereich eines Bedienelementes, die somit durch eine taktile Rückmeldung für den Benutzer füh<lbar ist. Bei Audioverstärkern ist dies beispielsweise die Mitteleinstellung des Panoramareglers, der die Lautstärkebalance zwischen linkem und rechtem Kanal regelt. Die Mittenrast muss jedoch nicht zwangsläufig in der Mitte des Einstellbereiches liegen, vielmehr ist als Rast eine beliebige exponierte Position wie zum Beispiel ein Default-Wert realisierbar. In einem Einstellbereich können auch mehrere derartige Rasten vorgesehen sein.

Das Dokument US 4318095 beschreibt ein herkömmliches Bedienelement.

Es ist die Aufgabe der vorliegenden Erfindung, ein Bedienelement mit programmierbarer Haptik bereitzustellen, das kostengünstig, konstruktiv einfach und kleinbauend gestaltet sowie leicht integrierbar ist.

Gelöst wird diese Aufgabe durch die Merkmale des Patentanspruchs 1. Weitere vorteilhafte Ausgestaltungsformen sind in den Unteransprüchen angegeben.

Ein erfindungsgemäßes Bedienelement mit programmierbarer Haptik, insbesondere einer programmierbaren Mittenrast, weist einen drehbar aufgenommenen Bedienknopf, wobei der Bedienknopf mit einem Zahnring kraftschlüssig oder formschlüssig verbunden oder einstückig ausgeführt ist und der Zahnring mittels des Bedienknopfes drehbar ist, und mindestens ein mittels eines Elektromagneten auf den Zahnring zu und/oder vom Zahnring weg bewegbares Rastelement auf.

Wird ein elektrischer Strom in den Elektromagneten eingeprägt, so erzeugt dieser Strom eine Magnetkraft, die eine Bewegung des Rastelemetes verursacht. Bei dem Zahnring handelt es sich um ein ringförmiges Bauteil, in dessen innerem Umfang ein Rastprofil in Form von Ausnehmungen und/oder Erhöhungen eingebracht ist. Somit ergibt sich eine Kontur, in die das Rastelement eingreifen und die das Rastelement durchlaufen kann. Dabei ist die Anordnung der Rasten im Zahnring prinzipiell beliebig, in vorteilhafter Weise sind die Rasten jedoch äquidistant angeordnet. Bei dem Rastelement handelt es sich beispielsweise um einen Stößel oder um ein sonstiges bewegliches Bauteil. Das Rastelement kann auch als Vorsprung eines Elementes wie zum Beispiel eines Hebels oder einer Blattfeder ausgebildet sein.

In der Ausführungsform der Erfindung ist der Zahnring einstückig mit der Handhabe, zum Beispiel dem Bedienknopf, des Bedienelementes ausgebildet oder ist der Zahnring formschlüssig oder kraftschlüssig mit der Handhabe verbunden. Ist das Rastelement im Eingriff mit dem Zahnring, nimmt der Benutzer dies bei der Drehung der Handhabe bzw. des Zahnrings als spürbare Rast wahr.

In einer bevorzugten Ausführungsform weist das Bedienelement zusätzlich mindestens eine Feinrastfeder auf. Diese Feinrastfeder steht in ständigem Kontakt mit dem Zahnring. Dadurch wird eine erste, grundlegende mechanische Rast bereitgestellt, die ständig wirkt und abhängig ist von der Form der Ausnehmungen im Zahnring, der Form der Feder und deren Federkennlinie. Greift der Stößel nicht in den Zahnring ein, so wird die Haptik des Bedienelementes ausschließlich durch die Feinrastfeder erzeugt. Diese Rast wird daher im Folgenden als Feinrast bezeichnet. Durch die frei programmierbare Zustellung des Rastelementes ist die Möglichkeit gegeben, der ersten Rast eine zusätzliche Rast zu überlagern, wodurch die zur Überwindung der kombinierten Rast notwendige Kraft beliebig einstellbar ist. Diese zusätzliche Rast wird im Folgenden als zuschaltbare Rast bezeichnet.

In einer nicht erfindungsgemässen ausführungsform weist das Bedienelement eine Rastfeder und einen Permanentmagneten auf, wobei das Rastelement fest mit der Rastfeder verbunden ist und die Federkraft der Rastfeder der Magnetkraft des Permanentmagneten entgegengerichtet ist. Die Rastfeder ist so angeordnet, dass sie das Rastelement gegen den Zahnring drückt, während der Permanentmagnet so orientiert ist, dass seine Magnetkraft das Rastelement vom Zahnring wegzieht. Der Permanentmagnet und der Elektromagnet sind derart zueinander ausgerichtet, dass der Elektromagnet je nach Bestromung die Magnetkraft des Permanentmagneten auf das Rastelement verstärkt oder abschwächt.

Ist die zuschaltbare Rast aktiviert, so wird das Rastelement durch die Federkraft in Eingriff mit dem Zahnring gebracht. Wird die Handhabe des Bedienelementes und damit der Zahnring aus der Rast herausgedreht, so wird durch die Flankenform der Ausnehmung und/oder Erhebung im Zahnring das Rastelement gegen die Federkraft von dem Zahnring weggedrückt und die Drehung freigegeben. Abhängig von der programmierten Haptik greift das Rastelement in die nächste Ausnehmung des Zahnringes ein oder wird durch den Permanentmagneten aus dem Eingriff herausgehalten.

Ist die zuschaltbare Rast inaktiv, so liegt das Rastelement so nah am Permanentmagneten, dass die Magnetkraft die ihr entgegengerichtete Federkraft überwiegt und das Rastelement nicht im Eingriff mit dem Zahnring steht. Im Extremfall liegt das Rastelement am Permanentmagneten oder dem Elektromagneten an.

In der Ausgestaltungsform weist das Bedienelement einen Hebel zur Übertragung der Magnetkraft des Elektromagneten auf das Rastelement auf. Ist der Elektromagnet bestromt, so zieht er den Hebel an, der dadurch das Rastelement in Eingriff mit dem Zahnring bringt. Bei der Drehung des Bedienelementes aus der Rast heraus muss durch die Form des Rastelementes und die Form der Ausnehmung des Zahnrings eine Kraft aufgebracht werden, die das Rastelement aus dem Eingriff mit dem Zahnring löst. Dazu muss diese Kraft die über den Hebel übertragene Anziehungskraft des Elektromagneten übersteigen. Liegt der Hebel am Magneten an, so entspricht diese Anziehungskraft der Abrisskraft des Magneten.

In einer nicht erfindungsgemässen Ausgestaltungsform weist das Bedienelement mindestens einen zweiten Magneten und mindestens ein zweites Rastelement auf. Somit lassen sich mehrere Haptiken erzeugen, die alternativ oder gleichzeitig aktiviert werden.

Die vorliegende Erfindung wird anhand dreier Ausführungsbeispiele erläutert. Dabei zeigt:

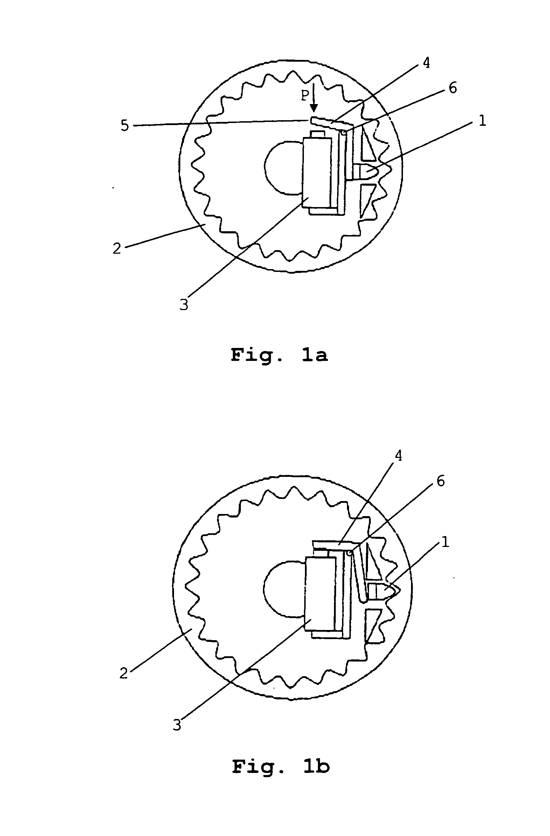

- Figur 1 a: ein Bedienelement mit Hebelmechanik bei unbestromten Magneten,
- Figur 1: b ein Bedienelement mit Hebelmechanik bei bestromten Magneten,
- Figur 2: ein Bedienelement mit Federmechanik, das nicht zur Enfindung gehört,
- Figur 3a: einen federbelasteten Stößel im Eingriff, dieses Beispiel gehört nicht zur Enfindung,

- Figur 3b: einen federbelasteten Stößel im Teileingriff, dieses Beispiel gehört nicht zur Enfindung,
- Figur 3c: einen federbelasteten Stößel nicht im Eingriff, dieses Beispiel gehört nicht zur Erfindung und
- Figur 4: ein Bedienelement mit Rastprofil am Außenumfang der Rastscheibe, wobei das Bedien element nicht zur Enfindung gehört.

Figur 1 a zeigt einen Schnitt durch ein erfindungsgemäßes Bedienelement mit einem Rastelement in Form eines Stößels 1, der in Ausnehmungen beziehungsweise Verzahnungen eines Zahnrings 2 eingreifen kann. Der Zahnring 2 ist um eine Achse senkrecht zur Zeichenebene drehbar und ist beispielsweise form- oder kraftschlüssig mit dem nicht dargestellten Bedienknopf des Bedienelementes verbunden. Alternativ ist der Zahnring 2 Teil des Bedienknopfes. Die zur Zustellung des Stößels 1 benötigte Kraft wird von einem Elektromagneten 3 erzeugt und über einen im Wesentlichen L-förmigen Hebel 4 übertragen. In dem in Figur 1a dargestellten Zustand ist der Elektromagnet 3 unbestromt und der Stößel 1 nicht im Eingriff mit dem Zahnring 2. Wird der Elektromagnet 3 bestromt, so zieht die dadurch entstehende Magnetkraft ein Ende 5 des Hebels 4 in Richtung P zum Elektromagneten 3 hin. Der Hebel 4 dreht sich um einen Drehpunkt 6, wodurch der Stößel 1 in eine Ausnehmung des Zahnrings 2 gedrückt wird. Dieser Zustand ist in Figur 1b dargestellt.

Während der Zahnring in Figur 1a frei drehbar ist, wird die Drehung in Figur 1b durch den Stößel 1 erschwert. Der Stößel 1 und die Ausnehmungen des Zahnrings 2 sind so geformt, dass durch Drehung des Zahnrings 2 eine Kraft erzeugt wird, die der durch den Hebel 4 übertragenen Kraft auf den Stößel 1 entgegenwirkt. Überschreitet diese durch die Drehung verursachte Kraft die durch den Hebel 4 übertragene Kraft, so bewegt sich der Stößel 1 aus der Ausnehmung heraus und der Zahnring 2 kann weitergedreht werden. Durch einen nicht dargestellten Winkelgeber wird die Drehung des Zahnrings 2 detektiert. Je nach Programmierung des Bedienelementes wird bei detektierter Drehung des Zahnrings 2 die Stromversorgung zum Elektromagneten 3 unterbrochen, wodurch der Stößel 1 nicht in eine benachbarte Ausnehmung des Zahnrings 2 gedrückt wird und sich somit keine weitere spürbare Rast ergibt, oder der Elektromagnet 3 bleibt bestromt, wodurch der Stößel 1 in die nächste Ausnehmung im Zahnring 2 eingreift.

Die Haptik des Bedienelementes ist frei programmierbar, indem eine Kennlinie hinterlegt wird, bei welcher Winkelstellung des Zahnrings 2 der Elektromagnet 3 mit einem Strom beaufschlagt werden soll. Die benötigte Kraft zur Überwindung der Rast hängt einerseits von der geometrischen Ausgestaltung des Stößels 1 und der Ausnehmungen und/oder Erhöhungen im Zahnring 2 ab, andererseits von der Stärke des in den Magneten 3 eingeprägten Stroms. Somit kann durch Variation des Stroms durch den Elektromagneten 3 die zur Überwindung einer bestimmten Rast notwendige Kraft individuell programmiert werden. Diese Kraft kann so groß werden, dass der Bedienknopf nicht aus der Rast herausgedreht werden kann und somit ein Endanschlag gebildet wird.

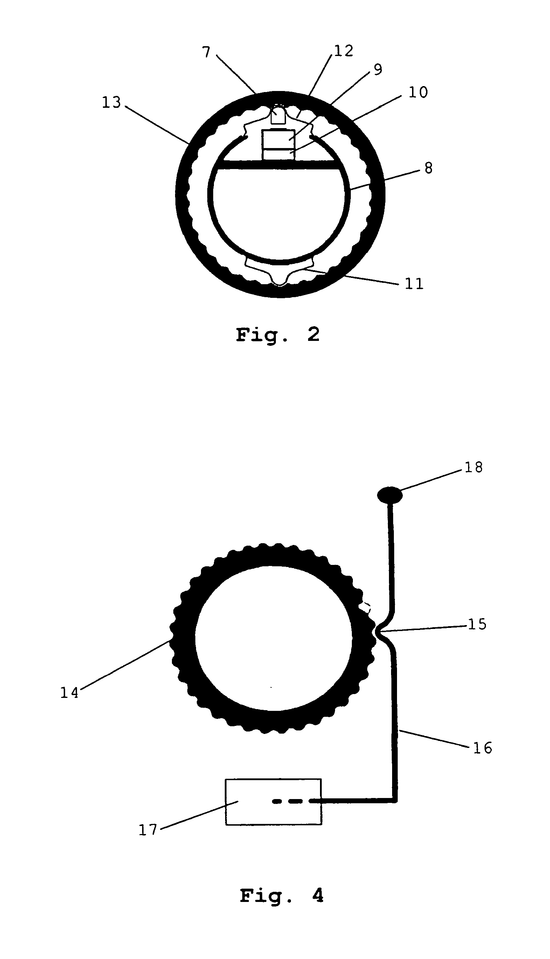

Figur 2 zeigt einen Ausschnitt eines nicht erfindungsgemäßen Bedienelementes mit einem federbelasteten Stößel 7. Ein feststehendes Innenteil 8 weist einen Elektromagneten 9, einen Permanentmagneten 10, eine Feinrastfeder 11 und eine Rastfeder 12 auf. Der zustellbare Stößel 7 ist fest mit der Rastfeder 12 verbunden. Dabei ist die Rastfeder 12 derart angeordnet, dass ihre Federkraft den Stößel 7 radial in Richtung des Zahnrings 13 drückt. Der Permanentmagnet 10 ist derart angeordnet, dass die von ihm erzeugte Magnetkraft gegen die Kraft der Rastfeder 12 wirkt und den Stößel 7 vom Zahnring 13 wegzieht. Die Feinrastfeder 11 ist derart angeordnet, dass sie ständig den Zahnring 13 berührt und im Eingriff mit den Ausnehmungen des einen einheitlichen Durchmesser aufweisenden Zahnrings 13 steht. Zur Drehung des Zahnrings 13 muß daher stets die von der Feinrastfeder 8 erzeugte Rast überwunden werden. Ist die zuschaltbare Rast aktiviert und der Stößel 7 ebenfalls im Eingriff mit dem Zahnring 13, so muss eine größere Drehkraft aufgewendet werden, um den Bedienknopf aus der Rast herauszudrehen. Somit ist diese Rast gegenüber anderen Rasten fühlbar hervorgehoben. Anzumerken ist, dass es sich bei der Feinrastfeder 11 um ein optionales Element handelt. Ohne die Feinrastfeder 11 ist der Bedienknopf bis auf die programmierbaren Rasten ungehindert drehbar.

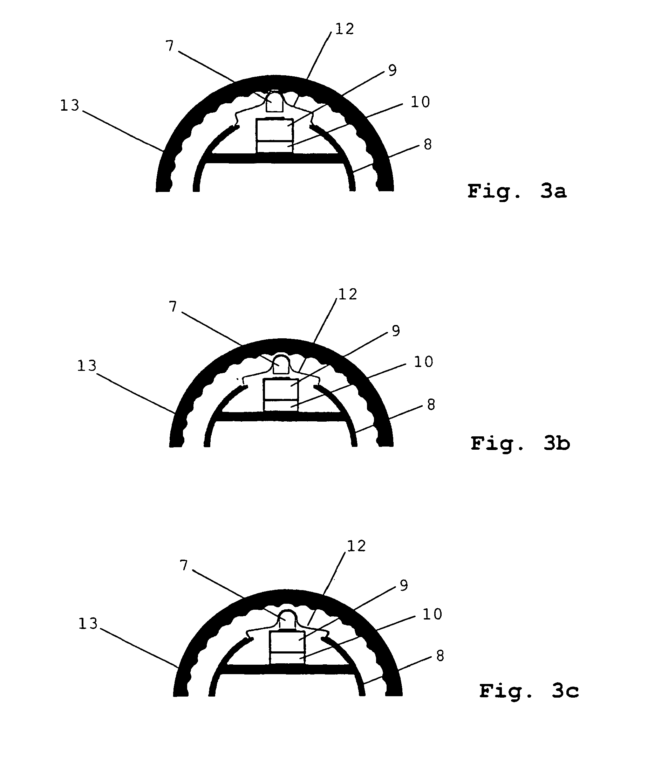

Figur 3a zeigt den Stößel 7 in einer Endlage, in der er in eine Ausnehmung des Zahnrings 13 eingreift und der Drehung des Zahnrings 13 somit eine Kraft entgegensetzt, die der Benutzer als überlagerte, zusätzliche Rast wahrnimmt. In diesem Fall übersteigt die Kraft der Feder 12 die entgegengerichtete Kraft des Permanentmagneten 10 und der Stößel 7 liegt am Zahnring 13 an.

In Figur 3b befindet sich der Stößel 7 im Teileingriff mit einer Ausnehmung des Zahnrings 13. In diesem Fall wird ein Strom in den Elektromagneten 9 eingeprägt, der die anziehende Magnetkraft des Permanentmagneten 10 auf den Stößel 7 verstärkt. Die Federkraft und die Magnetkraft befinden sich im Gleichgewicht, wodurch der Stößel 7 im Teileingriff mit dem Zahnring 13 steht. Dadurch ist im Vergleich zum Zustand in Figur 3a nur eine geringere Kraft notwendig, um die Rast zu überwinden und den Zahnring 13 zu drehen. Es ist jedoch auch möglich, den Elektromagneten 9 derart zu bestromen, dass er eine Kraft erzeugt, die die Kraft der Feder 12 unterstützt und den Stößel 7 damit verstärkt gegen den Zahnring 13 drückt. Damit ist zur Überwindung der Rast eine Drehkraft notwendig, die größer ist als bei abgeschaltetem Elektromagneten 9. Im Extremfall wird der Stößel 7 so stark gegen den Zahnring 13 gedrückt, dass der Benutzer den Bedienknopf nicht drehen kann und somit ein Anschlag simuliert wird.

Figur 3c zeigt den Stößel 7 in seiner zweiten Endlage, in der er am Elektromagneten 9 anliegt. Hier überwiegt die Kraft des Permanentmagneten 10 die Kraft der Feder 12. Der Stößel 7 befindet sich daher nicht im Eingriff mit dem Zahnring 13 und erzeugt somit keine zusätzliche Rast. Für den Benutzer ist nur die Feinrast durch die Feinrastfeder 11 spürbar.

Um den Stößel 7 aus der in Figur 3c gezeigten Lage in die in Figur 3a gezeigten Lage zu überführen wird der Elektromagnet 9 mit einem Strom beaufschlagt, durch den ein Magnetfeld erzeugt wird, welches das Magnetfeld des Permanentmagneten 10 derart überlagert, dass die Federkraft die Kraft des resultierenden Magnetfeldes auf den Stößel 7 überwiegt und die Feder 12 somit den Stößel 7 gegen den Zahnring 13 drückt.

Die Überführung des Stößels 7 aus der in Figur 3a gezeigten Lage in die in Figur 3c dargestellte Lage erfolgt bevorzugt dadurch, dass bei der Drehung des Zahnrings 13 durch die Form der Ausnehmungen im Zahnring 13 der Stößel 7 in Richtung des Permanentmagneten verschoben wird. Ab einer bestimmten Position überwiegt die Kraft des Permanentmagneten 10 die Federkraft, wodurch der Permanentmagnet 10 den Stößel 7 in seine Richtung zieht.

Weiterhin kann der Stößel 7 aus dem Eingriff gebracht werden, indem der Elektromagnet 9 derart bestromt wird, dass sein Magnetfeld das Feld des Permanentmagneten 10 verstärkt und die resultierende Magnetkraft die Federkraft übersteigt. Dadurch wird der Stößel in die in Figur 3c dargestellte Position überführt. Ist der Stößel 7 einmal in diese Endlage gelangt, kann der Elektromagnet 9 abgeschaltet werden, da die Magnetkraft des Permanentmagneten 10 ausreicht, den Stößel 7 festzuhalten. Diese Möglichkeit ist insbesondere dann von Vorteil, wenn mit dem Bedienelement verschiedene Größen eingestellt werden können. Ein Beispiel hierfür ist ein Bedienelement für ein Autoradio, mit dem sowohl die Lautstärke als auch die Links-Rechts-Verteilung eingestellt wird. Wurde die Verteilung in eine Mittenposition mit einer programmierten Zusatzrast gebracht und dann die Funktion auf Lautstärkeregelung umgestellt, so soll der Drehung des Bedienelementes aus der aktuellen Lage heraus keine zusätzliche Rast entgegenstehen.

Im vorgenannten zweiten Ausführungsbeispiel wird der Elektromagnet 9 dazu benötigt, den Stößel 7 von einer Endlage in die andere zu bewegen. Eine Bestromung des Elektromagneten 9 ist lediglich für diese Übergangsphase notwendig. Mit einer Bestromung über die Übergangsphase hinaus wird eine variabel programmierbare Kraft erreicht, die zur Drehung des Zahnrings 13 und damit des Bedienknopfes aufgebracht werden muss.

Figur 4 zeigt eine Schnittdarstellung eines nicht erfindungsgemässen Ausführungsbeispiels eines Bedienelementes, bei dem das Rastprofil am äußeren Umfang des Zahnrings 14 angeordnet ist. Ein Ende eines Hebels 16 ist an einem Punkt 18 fixiert, das andere, abgewinkelte Ende taucht in einen Elektromagneten 17 ein. Wird der Elektromagnet 17 bestromt, so wird der Hebel 16 um den Fixpunkt 18 gedreht, bis das durch einen Vorsprung 15 des Hebels 16 gebildete Rastelement in eine Ausnehmung des Zahnrings 14 eingreift. Die zur Drehung des Zahnrings 14 benötigte Kraft ist abhängig von der Magnetkraft des Elektromagneten und der Gestaltung des Hebels 16. In einer Abwandlung der Ausführungsform wird anstatt eines starren Hebels 16 eine Blattfeder verwendet.

Selbstverständlich kann die Feinrastfeder 11 aus dem zweiten Ausführungsbeispiel auch in einem Bedienelement gemäß dem ersten oder dritten Ausführungsbeispiel verwendet werden, um eine erste, stetige mechanische Rast zu erzeugen. Weiterhin kann im zweiten Ausführungsbeispiel die Feinrastfeder 11 weggelassen werden, damit der Zahnring 13 bzw. der Bedienknopf außerhalb der programmierbaren Rasten frei drehbar ist.

In einer Ausgestaltungsform der Erfindung weist der Zahnring 2, 13, 14 mehr als ein Rastprofil auf. In einer ersten Variante dieser Ausgestaltungsform weist der Zahnring 2, 13, 14 mehrere Rastprofile auf dem gleichen Umfang, also am inneren oder äußeren Umfang, auf. In einer zweiten Variante dieser Ausgestaltungsform ist sowohl auf dem inneren als auch auf dem äußeren Umfang des Zahnrings 2, 13, 14 jeweils mindestens ein Rastprofil angeordnet. Prinzipiell kann der Zahnring 2, 13, 14 aus mehreren separaten, mit Ausnehmungen und/oder Erhöhungen versehenen Scheiben gebildet sein. Durch verschiedene Rastprofile wird es beispielsweise ermöglicht, dass die Feinrastfeder 11 und das Rastelement 1, 7, 15 mit unterschiedlichen Rastprofilen zusammenwirken. Somit können die mit Hilfe des Rastelementes 1, 7, 15 erzeugten Rasten unabhängig von den durch die Feinrastfeder 11 erzeugten Rasten plaziert werden.

Desweiteren liegt es im Rahmen dieser Erfindung, mehrere Magnete und Stößel im Bedienelement anzuordnen. Für jeden Stößel kann eine eigene Rastcharakteristik programmiert werden. Die Charakteristiken der einzelnen Stößel können alternativ oder gleichzeitig aktiviert werden. Sind auf dem Zahnring mehrere Rastprofile vorhanden, so kann jeder Stößel in ein beliebiges Rastprofil eingreifen.

Durch Einprägung eines ausreichend großen Stromes in den Elektromagneten kann eine Kraft auf das Rastelement 1, 7, 15 erzeugt werden, die so groß ist, dass sich anstatt einer überwindbaren Rast ein Endanschlag ergibt.

## Patentansprüche

1. Bedienelement mit programmierbarer Haptik, insbesondere einer programmierbaren Mittenrast, für ein Kraftfahrzeug, aufweisend:
einen drehbar aufgenommenen Bedienknopf, wobei der Bedienknopf mit einem Zahnring (2) kraftschlüssig oder formschlüssig verbunden oder einstückig ausgeführt ist und der Zahnring (2) mittels des Bedienknopfes drehbar ist;
einen Elektromagneten (3);
mindestens ein mittels des Elektromagneten (3) auf den Zahnring (2) zu und/oder vom Zahnring (2) weg bewegbares Rastelement (7), wobei das Rastelement (1) aus dem Eingriff mit dem Zahnring (2) lösbar ist;
einen Winkelgeber, wobei der Winkelgeber die Drehung des Zahnrings (2) detektiert;
einen Hebel (4) zur Übertragung der Magnetkraft des Elektromagneten (3) auf das Rastelement (1), **dadurch gekennzeichnet, dass** der Zahnring (13) eine Verzahnung an seinem inneren Umfang aufweist und dass der Hebel (4) L-förmig ausgestaltet ist.

2. Bedienelement nach Anspruch 1, **gekennzeichnet durch** eine äquidistante Anordnung der Rasten im Zahnring (2).

3. Bedienelement nach einem der Ansprüche 1 oder 2, **gekennzeichnet durch** mindestens eine Feinrastfeder (11).

## Claims

1. Control element with a programmable tactile feedback, in particular a programmable central detent, for a motor vehicle, comprising:
a rotatably accommodated control button, wherein the control button is connected to a toothed ring (2) by force fit or positive fit or is configured integrally therewith, and the toothed ring (2) is rotatable by means of the control button;
an electromagnet (3);
at least one detent element (7) that can be moved towards the toothed ring (2) and/or away from the toothed ring (2) by means of the electromagnet (3), wherein the detent element (1) can be released from the engagement with the toothed ring (2);
an angle sensor, wherein the angle sensor detects the rotation of the toothed ring (2);
a lever (4) for transmitting the magnetic force of the electromagnet (3) onto the detent element (1), **characterised in that** the toothed ring (2) has a toothing on its inner circumference and that the lever (4) is configured in an L-shape.

2. Control element according to claim 1, **characterised by** an equidistant arrangement of the detents in the toothed ring (2).

3. Control element according to any one of the claims 1 or 2, **characterised by** at least one fine detent spring (11).

## Revendications

1. Elément de commande ayant une haptique programmable, en particulier une encoche d'arrêt médiane programmable, pour un véhicule automobile, comprenant :
un bouton de commande (1) reçu à rotation, ledit bouton de commande étant relié par liaison de force ou à engagement positif à une bague dentée (2) ou étant réalisé d'un seul tenant avec celle-ci et ladite bague dentée (2) étant apte à être tournée au moyen dudit bouton de commande ;
un électro-aimant (3) ;
au moins un élément d'arrêt (7) apte à être déplacé par l'intermédiaire dudit électro-aimant (3) vers ladite bague dentée (2) et/ou dans la direction opposée à ladite bague dentée (2), ledit élément d'arrêt (1) pouvant être mis hors prise de ladite bague dentée (2) ;
un capteur angulaire, ledit capteur angulaire détectant la rotation de ladite bague dentée (2) ;
un levier (4) de transmission de la force magnétique dudit électro-aimant (3) à l'élément d'arrêt (1), **caractérisé par le fait que** la bague dentée (2) présente une denture sur sa circonférence intérieure et que ledit levier (4) est réalisé en L.

2. Elément de commande selon la revendication 1, **caractérisé par** un agencement équidistant des encoches d'arrêt dans ladite bague dentée (2).

3. Elément de commande selon l'une quelconque des revendications 1 ou 2, **caractérisé par** au moins un ressort finement cranté (11).
